# FASCICULE DE BREVET EUROPEEN

(11) **EP 1 794 896 B1**
(45) Date de publication et mention de la délivrance du brevet: **27.02.2008**
(21) Numéro de dépôt: 05799912.0
(22) Date de dépôt: 26.09.2005
(51) Int. Cl.: H04B 5/00

(54) **DISPOSITIF SANS CONTACT DE PROTECTION DE LA VIE PRIVEE**
KONTAKTLOSE DATENSCHUTZVORRICHTUNG
CONTACTLESS PRIVACY PROTECTION DEVICE

(30) Priorité: 27.09.2004 FR 0452170
(43) Date de publication de la demande: 13.06.2007
(73) Titulaire: COMMISSARIAT A L'ENERGIE ATOMIQUE, 75015 Paris (FR)
(72) Inventeur: SAVRY, Olivier, F-38360 SASSENAGE (FR); VACHERAND, François, F-38800 PONT DE CLAIX (FR); CROCHON, Elisabeth, F-38320 POISAT (FR)
(74) Mandataire: Poulin, Gérard
(86) Numéro de dépôt international: PCT/FR2005/050778
(87) Numéro de publication internationale: WO 2006/035177

(56) Documents cités:
- WO-A-01/35320
- DE-A1- 10 012 057
- DE-A1- 10 208 478
- US-A- 5 557 085
- US-A1- 2004 145 472

## Description

### DOMAINE TECHNIQUE

L'invention est relative à un dispositif sans contact capable de filtrer un échange de communications entre un lecteur d'une étiquette RFID (radio frequency identification) et ladite étiquette. Le dispositif peut selon son mode de réalisation empêcher la communication entre l'étiquette et le lecteur ou l'autoriser de façon conditionnelle.

### ÉTAT DE LA TECHNIQUE ANTÉRIEURE

Une étiquette RFID est une puce ou un tag en principe passif. Lorsque l'étiquette est sollicitée par un lecteur, elle répond audit lecteur et lui transmet une identification contenue dans une mémoire de l'étiquette. L'étiquette peut répondre car le lecteur lui transmet au travers d'une antenne du lecteur, une énergie sous forme électromagnétique. La lecture peut se faire jusqu'à des distances de l'ordre de un à quelques mètres. Le fonctionnement est le suivant : l'étiquette représente dans le champ du lecteur une charge, matérialisée par son circuit et une résistance en parallèle à une inductance qui sert d'antenne de l'étiquette. Le lecteur émet une puissance constante dans le temps. Par conséquent, comme dans un transformateur entre le primaire et le secondaire, si la charge du secondaire, c'est à dire la charge représentée par l'étiquette, augmente alors le courant ou la tension suivant ce qui est fixe passant dans le primaire, c'est à dire l'antenne du lecteur, diminue. Ainsi, en modulant la charge de l'étiquette, on module le champ émis ou reçu par le lecteur. Le signal émis par l'étiquette est un signal de données obtenu par une modulation d'un paramètre d'une fréquence porteuse du signal émis, par exemple l'amplitude, ou la phase. Des normes fixent les fréquences porteuses disponibles pour les étiquettes RFID. Les fréquences actuellement disponibles sont par exemple 125 kHz, 13,56 MHz, 2,45 GHz, 5,8 GHz, et entre 860 et 930 MHz.

La généralisation des objets porteurs de telles étiquettes RFID, par exemple au travers des codes électroniques de produits (EPC) pose le problème de sauvegarder la vie privée des gens. Par exemple une personne munie d'un lecteur peut identifier tous les vêtements ou autres articles portés par une personne voisine. Il convient donc de pouvoir se protéger d'une lecture intrusive des étiquettes sans modifier le système mis en place et en particulier l'architecture simple des étiquettes.

### EXPOSÉ DE L'INVENTION

L'invention a pour objet un dispositif sans contact de protection de la vie privée, qui détecte les variations d'un champ magnétique dans l'une ou dans plusieurs des bandes de fréquences allouées pour les étiquettes RFID. Lorsqu'une émission est détectée indiquant qu'un lecteur est présent dans un voisinage suffisamment proche dit zone d'efficacité, pour lire une étiquette protégée par le dispositif, le dispositif modifie sa propre charge magnétique de façon à rendre variable de façon aléatoire ou à rendre constant le champ que pourront détecter le lecteur ou l'étiquette. Le paramètre modifié par le dispositif selon l'invention est le même que celui modulé par l'étiquette pour transmettre sa réponse. La lecture d'étiquette RFID est ainsi empêchée pour les étiquettes se trouvant dans la zone d'efficacité du dispositif. Si le lecteur est autorisé, alors diverses solutions autorisant la lecture peuvent être mises en oeuvre.

En résumé l'invention est relative à un procédé de protection de la vie privée destinée à empêcher ou à autoriser une communication entre un lecteur et au moins une étiquette RFID située dans une zone d'efficacité du dispositif de protection, caractérisé en ce que :
a) on détecte en permanence une variation éventuelle d'un champ magnétique ambiant dans l'une ou plusieurs de bandes de fréquence allouées aux étiquettes RFID,
b) en cas de détection d'une variation instantanée du champ magnétique local et en l'absence d'une inhibition, on modifie une valeur de paramètre d'un circuit magnétique de façon à modifier la valeur instantanée du champ magnétique local.

Cette communication peut être soit l'émission d'un signal du lecteur vers une étiquette soit la réponse d'une étiquette à un lecteur.

En cas d'inhibition, par exemple dans le cas où il est reconnu par le dispositif que le lecteur est un lecteur autorisé, alors la valeur de paramètre n'est pas modifié en sorte que tout se passe comme si le dispositif protecteur n'était pas présent. Il sera vu plus loin que dans un mode de réalisation, le dispositif selon l'invention émule les étiquettes qu'il a sous sa protection.

Dans un mode de réalisation pour détecter une variation éventuelle du champ magnétique local :
- on produit un signal représentatif d'une valeur moyenne du champ magnétique au cours d'une période de détection,
- on compare le signal représentatif d'une valeur moyenne du champ magnétique au cours de ladite période de détection à un signal représentatif de la valeur instantanée du champ magnétique,
- on décide qu'il y a variation du champ magnétique local si le résultat de la comparaison indique une différence entre le signal moyen et le signal instantané supérieure à un niveau prédéterminé.

Pour la modification du paramètre d'un circuit magnétique prévue à l'étape b).

De préférence, on produit un signal représentatif de la différence entre une valeur moyenne et une valeur instantanée du champ magnétique et on utilise ledit signal de différence pour modifier ledit paramètre de façon à ramener la valeur instantanée du champ magnétique à sa valeur moyenne.

Ainsi tout se passe pour le lecteur intrusif comme s'il n'y avait pas d'étiquettes dans la zone d'efficacité.

Dans un mode de réalisation, pour la modification du paramètre d'un circuit magnétique, prévue à l'étape b du procédé, on produit un signal de façon à ce que la valeur instantanée du champ corresponde à une valeur produite par une étiquette quelconque ou par un lecteur quelconque.

Dans un mode de réalisation lorsque à l'étape a il est détecté une variation du champ magnétique local, on émet une interrogation demandant une identification d'un lecteur ou d'une étiquette.

Au cas où une réponse d'identification est reçue, l'identification est comparée à chacune des identifications d'une liste, et :
- si la réponse d'identification est identique à une identification figurant sur la liste, on émet un signal d'inhibition, inhibant la modification du paramètre du circuit magnétique. Dans un mode de réalisation alternatif, dans le cas où l'identification figure sur la liste, la modification du paramètre du circuit magnétique est effectuée de façon à transmettre de façon cryptée la communication entre un lecteur et au moins une étiquette RFID située dans la zone d'efficacité du dispositif de protection,
- s'il n'y a pas de réponse d'identification ou si l'identification reçue ne figure pas sur la liste, alors aucun signal d'inhibition inhibant la modification du paramètre du circuit magnétique n'est émis.

Ce mode de réalisation, où un signal crypté ou non est émis, permet de communiquer entre des lecteurs et/ou des étiquettes identifiés préalablement autorisés.

Dans un mode de réalisation, lorsque à l'étape a) il est détecté une variation du champ magnétique local, on émet un code électronique de produit (EPC) identifiant un dispositif protecteur de la vie privée, ce code ayant notamment une identification de classe d'objet permettant de savoir que l'objet est un dispositif de protection de la vie privée et un numéro de série permettant d'identifier un dispositif particulier à l'intérieur de la classe d'objet, le code EPC émis comportant l'identification de la classe d'objet et un numéro de série fictif, variant à chaque nouvelle émission du code EPC.

De cette façon le lecteur éventuellement intrusif sait qu'un dispositif protecteur de la vie privée est présent dans sa zone d'efficacité, mais il ne peut l'identifier et reconnaître s'il s'agit d'un dispositif qu'il a déjà rencontré dans sa zone d'efficacité

L'invention est aussi relative à un dispositif protecteur de la vie privée destiné à empêcher ou à autoriser une communication entre un lecteur et au moins une étiquette RFID dans une zone d'efficacité du dispositif caractérisé en ce qu'il comporte :
- des moyens de détection d'une variation d'un champ magnétique local dans une ou plusieurs de bandes de fréquence RFID et produisant un signal de détection lorsqu'une variation de champ magnétique est détectée,
- des moyens formant antenne,
- une charge magnétique variable de façon commandée couplée auxdits moyens formant antenne,
- des moyens de commande de la variation de ladite charge magnétique commandant une variation de ladite charge,
- lesdits moyens de commande de la variation de ladite charge magnétique étant couplés d'une part aux moyens de détection d'une variation d'un champ magnétique local pour recevoir de ces moyens un signal de détection d'une variation, et étant couplés à ladite charge magnétique variable de façon commandée, pour modifier ladite charge aussi longtemps que la détection de variation d'un champ magnétique local est reçue.

Ainsi, le champ envoyé par le lecteur éventuellement intrusif, et modulé par la variation de charge de l'antenne de l'étiquette est récupéré par l'antenne du dispositif protecteur de vie privée selon l'invention. On effectue une détection de l'amplitude moyenne du champ présent dans la zone où se trouve le dispositif protecteur de vie privée. En l'absence d'un lecteur il est supposé que ce champ est constant. En présence d'un lecteur ce champ va prendre une valeur variable dans le temps résultant du champ émis par le lecteur, et de la modulation induite par l'étiquette. La détection de la variation du champ peut être effectuée de différentes manières.

Par exemple, un détecteur d'enveloppe peut être utilisé pour récupérer les variations d'amplitude du champ. Il peut être constitué d'une diode et d'une capacité. Le signal est ensuite lissé par un filtre passe-bas, comprenant une résistance et une capacité, sur une période de temps assez longue.

Ce lissage peut être fait sur quelques périodes de modulation, c'est à dire quelques bits, sur toute une trame ou sur une période temporelle encore plus grande. Cette amplitude moyenne de champ est comparée constamment à l'amplitude instantanée du champ récupéré par l'antenne du dispositif protecteur de vie privée. Cette comparaison peut être faite par un amplificateur différentiel, recevant sur une entrée le signal détecté lissé et sur l'autre le signal reçu non traité en sortie d'un détecteur d'enveloppe. Si cette différence est non nulle, un signal en sortie de l'amplificateur différentiel est transmis à un modulateur de charge du dispositif protecteur de vie privée. Le modulateur module alors la charge du dispositif protecteur de vie privée par exemple de façon aléatoire. Dans un mode de réalisation une contre réaction de l'amplificateur différentiel permet d'agir sur la charge d'antenne du dispositif protecteur de vie privée afin de tendre à annuler cette différence. Cette variation de charge sur les moyens formant antenne, du dispositif protecteur de vie privée peut être obtenue, par exemple, par un transistor MOS dont la grille, et par voie de conséquence l'impédance, est contrôlée par un signal provenant de l'amplificateur différentiel, directement si l'on souhaite produire un champ constant ou au travers d'un générateur de bruit aléatoire si l'on veut faire un brouillage de la lecture du signal transmis par l'étiquette au lecteur.

### BRÈVE DESCRIPTION DES DESSINS

Des modes de réalisation de l'invention seront maintenant décrits à titre d'exemples non limitatifs en regard des dessins annexés dans lesquels :
La figure 1 représente le principe d'interposition du dispositif protecteur de vie privée selon l'invention entre le lecteur et l'étiquette.
La figure 2 représente une implantation physique d'un dispositif protecteur de vie privée selon l'invention.
La figure 3 représente un exemple d'un circuit de détection de la présence d'un lecteur d'étiquettes RFID dans le voisinage du dispositif protecteur de vie privée.
La figure 4 représente un synoptique d'un autre dispositif protecteur de vie privée passif émulateur de lecteur.

Dans les différentes figures, des références identiques désignent des éléments identiques ou ayant même fonction.

### EXPOSÉ DÉTAILLÉ DE MODES DE RÉALISATION PARTICULIERS

Dans l'exposé qui va suivre, il est décrit, la protection de la vie privée, pour inhiber ou autoriser des réponses d'étiquette à une interrogation d'un lecteur. L'exposé permet cependant de comprendre que la protection est adaptable à l'émission d'un lecteur vers l'étiquette.

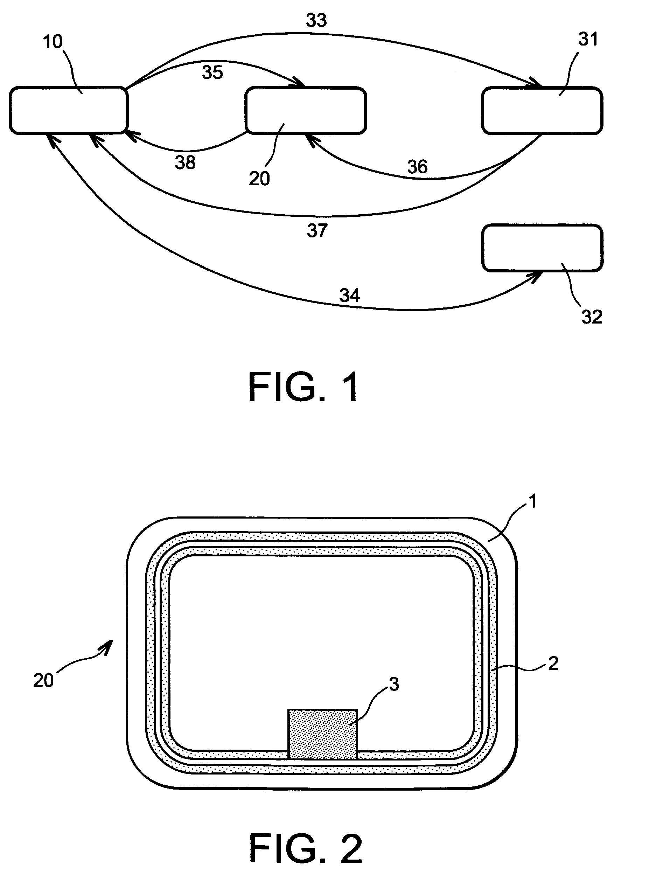

La figure 1 représente le principe d'interposition du dispositif protecteur de vie privée selon l'invention entre le lecteur et l'étiquette.

On a représenté un lecteur 10, le dispositif protecteur de vie privée 20 et deux étiquettes RFID 31 et 32. Il s'agit d'un exemple simplificateur, le nombre d'étiquettes n'est pas limité.

Un lecteur 10 émet un champ dans l'une des fréquences situées dans l'une des bandes de fréquence attribuées aux étiquettes RFID. Ce champ émis est reçu comme matérialisé sur la figure 1 par des flèches 33, 34 par les étiquettes 31, 32

De façon en elle-même connue, les étiquettes vont répondre selon un ordre temporel prédéterminé, en sorte que dans un intervalle de temps donné une seule étiquette à la fois répond.

La réponse de l'étiquette par exemple 31 serait reçue en l'absence de l'action du dispositif 20 par le lecteur 10 comme matérialisé par la flèche 37. Dans le cas présent la réponse de l'étiquette 31 est également reçue par le dispositif 20 protecteur de la vie privée comme matérialisé par la flèche 36. Si au reçu de l'émission de l'étiquette 31, le dispositif 20 protecteur de la vie privée modifie sa propre charge, le lecteur 10 reçoit un signal qui est la résultante des variations de charge de l'étiquette 31 et des variations de charge du dispositif 20 protecteur de la vie privée, comme matérialisé par les flèches 37 et 38. En conséquence le lecteur 10 ne reçoit plus la réponse de l'étiquette 31, mais un autre signal. La lecture est empêchée.

Dans la suite de l'exposé trois modes de réalisation de dispositif 20 protecteur de la vie privée seront décrits, avec des complexités techniques croissantes selon qu'ils sont télé alimentés ou non :
1. dispositif 20 protecteur de la vie privée passif,
2. dispositif 20 protecteur de la vie privée passif émulateur du lecteur 10,
3. dispositif 20 protecteur de la vie privée actif car ayant une source autonome d'alimentation électrique, par exemple une pile ou une batterie.

Une forme schématique d'un exemple de réalisation d'un dispositif 20 protecteur de la vie privée passif est représentée figure 2. Le dispositif 20 comprend, montés sur un support isolant 1, des moyens formant antenne 2 connectés à une puce 3 de traitement des signaux reçus par les moyens formant antenne 2. Les moyens formant antenne 2 sont de type inductif pouvant fonctionner en basses fréquences, par exemple dans la bande de fréquences RFID centrée à 13,56 MHz. L'antenne pourrait aussi être capacitive. Extérieurement, le dispositif 20 protecteur de la vie privée ressemble à une étiquette RFID avec une puce et une antenne. Le dispositif 20 protecteur de la vie privée peut aussi être conçu avec des composants discrets. Pour que le dispositif 20 protecteur de la vie privée, fonctionne dans toutes les positions et puisse intercepter le champ d'un lecteur pouvant venir de n'importe quelle partie de l'espace, il peut être muni en remplacement de l'antenne inductive 2 représentée figure 2 d'une antenne omnidirectionnelle plane en elle-même connue. Le dispositif 20 est dit passif car il est télé alimenté par le champ produit par un lecteur d'interrogation d'étiquette RFID, de la même façon que l'est une étiquette RFID. Le dispositif 20 représenté figure 2 est mono standard. Il peut aussi être multi-standard et comporter une antenne adaptée à chacune de plusieurs des bandes de fréquence allouées aux étiquettes RFID. Il peut également être intégré dans un appareil nomade typiquement un téléphone portable. L'intérêt d'une telle intégration sera expliqué plus loin.

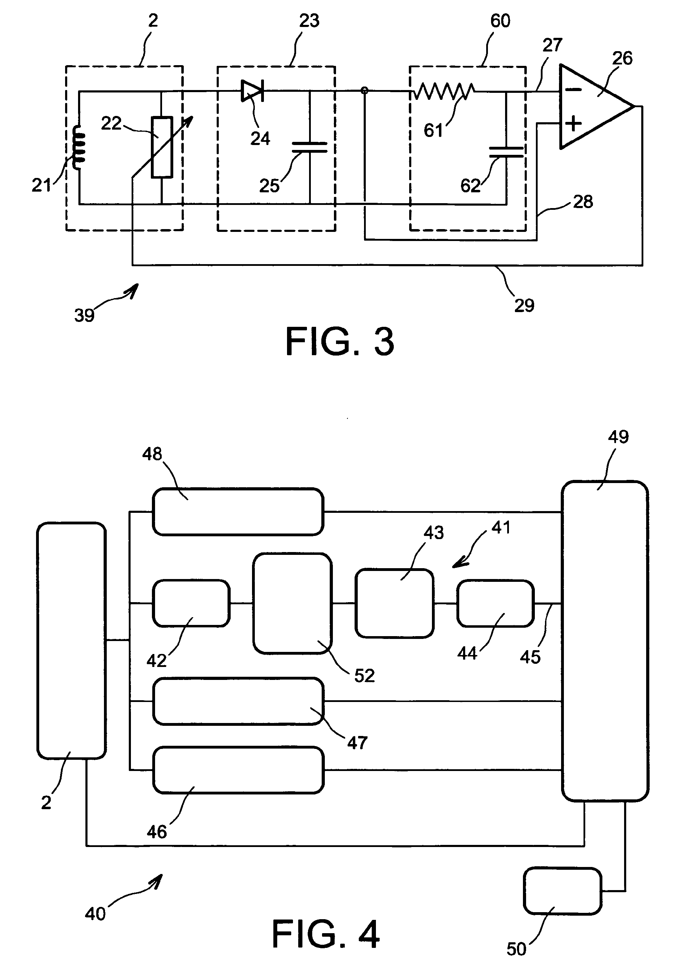

Un exemple d'un circuit 39 inclus dans la puce 3 et permettant au dispositif 20 de faire de la contre modulation de charge est représenté figure 3.

Le circuit 39 comporte des moyens d'antenne 2. Ces moyens d'antenne 2 comporte eux-mêmes un moyen 21 d'émission réception d'un signal par exemple une boucle conductrice comme représenté figure 2 ou un enroulement conducteur de façon à induire localement des variations du champ magnétique comme représenté schématiquement en 21 figure 3. Le moyen d'émission 21 est couplé en série ou comme représenté figure 3 en parallèle à une charge 22 variable de façon commandée . Le circuit 39 comporte également un circuit 23 de détection d'enveloppe, un circuit de lissage sous forme d'un filtre passe-bas 60 et un amplificateur différentiel 26 dont une première entrée 27 est couplée audit circuit de lissage 60. Le circuit 23 de détection d'enveloppe, le circuit 60 et l'amplificateur 26 forment ensemble des moyens de détection d'une variation de l'amplitude d'un champ magnétique local. Le circuit 23 de détection d'enveloppe comporte par exemple comme représenté figure 3, un moyen redresseur 24, par exemple une diode, et un moyen de lissage 25 de l'enveloppe détectée, par exemple un filtre passe-bas représenté figure 3 sous forme d'une capacité 25, connecté au moyen redresseur 24. Le circuit de détection d'enveloppe 23 est couplé au circuit de lissage 60 constitué d'une résistance 61 et d'une capacité 62. La sortie du circuit 60 couplée à l'entrée 27 de l'amplificateur différentiel 26 porte un signal représentatif d'une amplitude moyenne du champ magnétique reçu par l'antenne 2. L'amplificateur différentiel 26 comporte une seconde entrée 28, couplée au circuit 23 de détection d'enveloppe, recevant le signal instantané provenant de l'antenne 2 et représentant l'amplitude instantanée du champ.

Le fonctionnement est le suivant :

Le champ envoyé par un lecteur a priori intrusif et modulé par la variation de charge de l'antenne d'une étiquette telle l'étiquette 31 représenté figure 1 est récupéré par les moyens d'antenne 2 du dispositif 20 protecteur de la vie privée.

Les circuits couplés 23 de détection d'une enveloppe du champ magnétique local, et 60 de lissage du signal reçu par le circuit 23, effectuent une détection d'enveloppe en redressant le signal reçu par les moyens d'antenne 2 au moyen du détecteur d'enveloppe 23, et un lissage par le filtre passe-bas représenté figure 3 sous forme de la capacité 62 et de la résistance 61. Ce lissage peut être fait sur quelques périodes de modulation, c'est-à-dire quelques bits, sur toute une trame ou sur plus longtemps encore. Cette amplitude moyenne de champ est comparée constamment par l'amplificateur différentiel 26 à l'amplitude instantanée du champ récupéré en sortie du détecteur d'enveloppe 23. Dans l'exemple représenté figure 3, si cette différence est non nulle, une boucle de contre-réaction 29 recevant un signal de détection d'une variation de l'amplitude du champ magnétique reçu, présent en sortie de l'amplificateur différentiel 26 permet d'agir sur la charge 22 de l'antenne du dispositif 20 protecteur de la vie privée afin de tendre à annuler cette différence. Cette variation de la charge 22 sur l'antenne 2 peut être obtenue, par exemple, par un transistor MOS dont la grille et donc l'impédance, est contrôlée par la sortie de l'amplificateur différentiel 26.

La figure 4 montre un synoptique d'un exemple d'un second mode de réalisation de l'invention, sous forme d'un circuit 40 passif, capable dans une variante de réalisation d'émuler un lecteur 10. Ce circuit comporte, raccordés d'une part à des moyens d'antenne 2 et à un circuit séquenceur 49 dont il sera parlé plus loin, un circuit d'alimentation 41 en énergie électrique, un circuit 46 de récupération d'un signal d'horloge, un circuit démodulateur 47 et un circuit 48 de contre modulation d'une charge magnétique faisant partie des moyens d'antenne 2. Le circuit d'alimentation 41 en énergie électrique récupère l'énergie envoyée par un lecteur 10, présente au niveau des moyens d'antenne 2. Le circuit d'alimentation 41 comporte en série, un circuit 42 redresseur, redressant le courant récupéré par l'antenne 2, un circuit 52 de protection contre les champs forts, par exemple sous forme d'un circuit limiteur de tension ou courant, un circuit 43 de génération d'une référence de tension, comportant par exemple une diode Zener, et enfin un circuit 44 régulateur de tension. Une sortie 45 du circuit d'alimentation 41 permet de fournir dans de bonnes conditions une tension constante pour alimenter les autres circuits 46-49 formant ensemble avec le circuit d'alimentation 41, le circuit de brouillage 40. Des connexions du circuit 41 aux circuits 46-48 n'ont pas été représentées. Le circuit de récupération d'un signal d'horloge 46 permet de récupérer le signal d'horloge du lecteur 10, à partir du signal reçu par les moyens d'antenne 2. De tels circuits de récupération d'horloge sont en eux même connus. Le circuit 47 démodulateur démodule le signal envoyé par le lecteur 10 et reçu par les moyens d'antenne 2. Le circuit 48 de contre modulation de charge permet de faire écran entre le lecteur 10 et une étiquette 31, et dans certains mode de réalisation d'émuler le lecteur 10. Le circuit 48 sert à la fois en réception car il fait une modulation de charge opposée à la modulation produite par la réponse de l'étiquette 31 reçue au niveau de l'antenne 2, et à la fois en émission car par la modulation de la charge qu'il produit au niveau des moyens d'antenne 2, il modifie le message envoyé par le lecteur 10. Enfin le séquenceur 49 permet de contrôler le déroulement des opérations effectuées par le dispositif 20 protecteur de la vie privée. Il peut prendre la forme d'un microprocesseur effectuant de la logique binaire pré-programmée. Il traite le flux de données. Il est capable aussi d'inhiber le circuit 48 en fonction de la séquence des évènements.

Le fonctionnement est le suivant. Le signal émis par le lecteur est reçu au niveau des moyens d'antenne 2 et exploité de la façon suivante. De l'énergie contenue dans le signal reçu par l'antenne 2 est récupérée par le circuit d'alimentation 41 et distribuée aux autres circuits en tant que de besoin. Le signal d'horloge du lecteur 10 est récupéré par le circuit récupérateur d'horloge 46 à partir de la porteuse émise par le lecteur et fourni au séquenceur 49, capable de comprendre le message envoyé par le lecteur. Le circuit démodulateur 47 démodule le signal reçu au niveau de l'antenne 2. Ce signal est la résultante du champ produit par le lecteur 10 et de la variation de charge électromagnétique produite par la réponse de l'étiquette 31. Le signal reçu contient donc les données produites par l'étiquette. Le démodulateur 47 effectue notamment le traitement de détection de la variation du champ magnétique comme décrit ci-dessus en relation avec la figure 3. Le séquenceur 49 reçoit les informations en provenance des circuits 46 de récupération d'horloge et du démodulateur 47. A partir de ces informations il détecte qu'un lecteur 10 est présent dans une zone d'action du dispositif 20 protecteur de la vie privée. Le séquenceur 49 décide à partir de ces information s'il faut appliquer une contre modulation de charge et pour cela commander le circuit 48 de contre modulation de charge. Le circuit 48 verra une variation du champ et la modifiera en faisant varier la charge de l'antenne 2. Il peut aussi lisser l'amplitude du champ ou rajouter un bruit sur la modulation. Alors le lecteur ne reconnaît plus les étiquettes dans la zone d'efficacité du dispositif de protection.

Une fonctionnalité plus poussée peut être ajoutée au dispositif 40. En plus de la modulation de charge effectuée par le circuit 48 servant à écranter les étiquettes dans le champ, le séquenceur peut superposer une modulation de charge qui permet d'émettre n'importe quelle réponse au lecteur 10. Ainsi, le dispositif 20 est capable de faire croire au lecteur 10 qu'il est une certaine étiquette (n'importe laquelle) tout en faisant croire au lecteur 10 que toutes les autres étiquettes dans le champ d'action du dispositif 20 ne sont pas là. Ainsi le dispositif 20 joue le rôle d'émulateur d'étiquette.

Une fonctionnalité plus poussée peut être ajoutée au dispositif 20. Le circuit 48 est en effet capable non seulement de brouiller les réponses d'étiquettes dans la zone d'efficacité du dispositif 20 mais encore de brouiller la requête émise par le lecteur 10. Certains lecteur RFID possède des indices de modulation d'amplitude assez élevés de l'ordre de 90% qu'il est facile avec une modulation de charge du circuit 48 de lisser ou de bruiter.

Une autre amélioration dans le cas d'un lissage effectué par le circuit 48 de la requête émise par le lecteur 10 est de rajouter sur ce lissage la modulation de charge que l'on veut afin de remplacer le message émis par le lecteur 10 par un message choisi par le dispositif protecteur.

Des fonctions d'alarme très simples comme un signal sonore à chaque fois qu'une intrusion est détectée ou un signal lumineux (LED par exemple) peuvent être ajoutées.

Cette fonctionnalité optionnelle a été représentée sous forme d'une sortie du séquenceur 49 couplée à une alarme 50.

Des fonctionnalités plus poussées peuvent être ajoutées au dispositif.

Selon la consommation électrique de ces fonctions, il pourra s'avérer nécessaire de remplacer le circuit d'alimentation 41, par une source autonome, une batterie ou une pile, et un circuit d'alimentation 41' adapté en conséquence. Une telle modification rendant le dispositif selon l'invention actif, est à la portée de l'Homme du métier et ne sera pas décrite.

Le dispositif 20 peut ainsi comporté, comme une étiquette RFID, un identifiant sous forme d'un code électronique de produit (code EPC). Un tel identifiant contenu par exemple dans une mémoire du séquenceur 49 permet au lecteur l'éclairant de savoir qu'il a dans son champ un dispositif 20 protecteur de la vie privée. Un code EPC comporte notamment, un en-tête, une identification de classe d'objet permettant, dans ce cas, de savoir que l'objet est un dispositif de protection de la vie privée et un numéro de série permettant d'identifier un dispositif particulier à l'intérieur de la classe d'objet. De préférence le code EPC émis par le dispositif 20 protecteur de la vie privée comporte l'identification de la classe d'objet et un numéro de série fictif, variant à chaque nouvelle émission du code EPC.

L'identifiant ainsi émis ne permet pas d'identifier la personne porteuse du dispositif 20 protecteur de la vie privée puisque seul le numéro concernant le produit est fixe ce qui permet de faire connaître au lecteur la présence du dispositif 20 protecteur de la vie privée sans risque pour la vie privée du possesseur du dispositif 20. Ainsi, tout lecteur est capable de communiquer avec un dispositif 20 comme si celui-ci était une étiquette RFID. Réciproquement, dans un mode de réalisation du dispositif 20 protecteur de la vie privée, le programme du séquenceur est prévu pour demander un identifiant au lecteur si un tel lecteur est détecté, ainsi éventuellement que des informations le concernant. Le séquenceur 49 comporte dans ce mode de réalisation des moyens de mémoire stockant une liste d'identifications de lecteurs autorisés d'étiquettes RFID. Le séquenceur 49 commande les moyens 48 de commande de la variation de la charge magnétique des moyens d'antenne 2, pour faire varier ladite charge de façon à ce qu'elle produise une interrogation. Le séquenceur n'active pas les moyens 48 de commande de la variation de la charge magnétique, si une réponse favorable est reçue identifiant un lecteur figurant sur sa liste. Dans une variante de réalisation, lorsqu'une réponse favorable est reçue, le dispositif 20 émule les étiquettes qu'il a sous sa protection. Dans une autre variante de réalisation en cas de réponse favorable, le séquenceur est programmé pour qu'il se crée une communication sécurisée avec un protocole de cryptographie à clé publique entre le dispositif 20 et le lecteur.

Certaines des fonctionnalité du dispositif 20 qui ont été décrites en liaison avec la figure 4, nécessite un séquenceur disposant d'une mémoire, d'un programme consommateur d'énergie en sorte que l'énergie envoyée par le lecteur pourrait être insuffisante pour l'alimenter. Dans un tel cas, l'alimentation 41 est adaptée pour une alimentation à partir d'une source autonome comme une pile ou une batterie comme expliqué plus haut.

Dans ce cas il est particulièrement avantageux d'intégrer le dispositif 20 sur un autre objet nomade comportant une alimentation électrique autonome, en particulier un téléphone portable.

L'antenne 2 peut être dans ce cas par exemple plaquée au dos du téléphone et avantageusement son circuit électrique peut faire partie intégrante de celui de ce même téléphone.

## Revendications

1. Procédé de protection de la vie privée destiné à empêcher ou à autoriser une communication entre un lecteur et au moins une étiquette RFID située dans une zone d'efficacité, mis en oeuvre par un dispositif protecteur de la vie privée distinct du lecteur et de l'étiquette RFID, dans lequel :
a) on détecte en permanence une variation éventuelle d'un champ magnétique ambiant dans l'une ou plusieurs de bandes de fréquence allouées aux étiquettes RFID, correspondant à une requête émise par le lecteur à l'étiquette ou à une réponse de l'étiquette au lecteur,
b) en cas de détection d'une telle variation, on effectue un brouillage de la requête émise par le lecteur ou d'une réponse de l'étiquette en modifiant une valeur de paramètre d'un circuit magnétique du dispositif protecteur de façon à effectuer une contre modulation de charge apte à modifier la requête émise par le lecteur ou à s'opposer à la modulation produite par la réponse de l'étiquette.

2. Procédé de protection de la vie privée selon la revendication 1, la détection de la variation éventuelle du champ magnétique ambiant étant réalisée :
- en produisant un signal représentatif d'une valeur moyenne du champ magnétique au cours d'une période de détection,
- en comparant le signal représentatif d'une valeur moyenne du champ magnétique au cours de ladite période de détection à un signal représentatif de la valeur instantanée du champ magnétique,
- en décidant qu'il y a variation du champ magnétique local si le résultat de la comparaison indique une différence entre le signal moyen et le signal instantané supérieure à un niveau prédéterminé.

3. Procédé de protection de la vie privée selon l'une des revendications 1 ou 2, dans lequel, pour la modification du paramètre d'un circuit magnétique prévue à l'étape b),
- on produit un signal représentatif de la différence entre une valeur moyenne et une valeur instantanée du champ magnétique et on utilise ledit signal de différence pour modifier ledit paramètre de façon à ramener la valeur instantanée du champ magnétique à sa valeur moyenne.

4. Procédé de protection de la vie privée selon l'une des revendications précédentes, dans lequel :
- lorsque à l'étape a) il est détecté une variation du champ magnétique local, on émet une interrogation demandant une identification d'un lecteur ou d'une étiquette,
- au cas où une réponse d'identification est reçue, l'identification est comparée à chacune des identifications d'une liste, et
- si la réponse d'identification est identique à une identification figurant sur la liste, on émet un signal d'inhibition, inhibant la modification du paramètre du circuit magnétique prévue à l'étape b),
- s'il n'y a pas de réponse d'identification ou si l'identification reçue ne figure pas sur la liste, alors aucun signal d'inhibition inhibant la modification du paramètre du circuit magnétique n'est émis.

5. Procédé de protection de la vie privée selon l'une des revendications 1 à 3, dans lequel :
- lorsque à l'étape a) il est détecté une variation du champ magnétique local, on émet une interrogation demandant une identification d'un lecteur ou d'une étiquette,
- au cas où une réponse d'identification est reçue, l'identification reçue est comparée à des identifications d'une liste, et
- si la réponse d'identification est identique à une identification figurant sur la liste, la modification du paramètre du circuit magnétique est effectuée de façon à transmettre de façon cryptée la communication entre le lecteur et au moins une étiquette RFID située dans la zone d'efficacité,
- s'il n'y a pas de réponse d'identification ou si l'identification reçue ne figure pas sur la liste, alors aucun signal d'inhibition inhibant la modification du paramètre du circuit magnétique n'est émis.

6. Procédé de protection de la vie privée selon l'une des revendications 1 à 3, dans lequel :
- lorsque à l'étape a) il est détecté une variation du champ magnétique local, on émet un code électronique de produit (EPC) identifiant un dispositif protecteur de la vie privée, ce code ayant notamment une identification de classe d'objet permettant de savoir que l'objet est un dispositif de protection de la vie privée et un numéro de série permettant d'identifier un dispositif particulier à l'intérieur de la classe d'objet, le code EPC émis comportant l'identification de la classe d'objet et un numéro de série fictif, variant à chaque nouvelle émission du code EPC.

7. Dispositif (20) protecteur de la vie privée destiné à empêcher ou à autoriser une communication entre un lecteur et au moins une étiquette RFID dans une zone d'efficacité du dispositif, comportant :
- des moyens (39, 47, 49) de détection d'une variation d'un champ magnétique local dans une ou plusieurs de bandes de fréquence RFID, correspondant à une requête émise par le lecteur à l'étiquette ou à une réponse de l'étiquette au lecteur, et apte à produire un signal de détection lorsqu'une variation de champ magnétique est détectée,
- des moyens (2) formant antenne,
- une charge (22, 2) variable de façon commandée couplée auxdits moyens formant antenne,
- des moyens (26, 48, 49, 60) de commande apte à commander une variation de ladite charge (22, 2) après réception dudit signal de détection pour effectuer un brouillage de la requête émise par le lecteur ou d'une réponse de l'étiquette respectivement en modifiant la requête émise par le lecteur ou en s'opposant à la modulation produite par la réponse de l'étiquette.

8. Dispositif (20) protecteur de la vie privée selon la revendication 7, dans lequel les moyens (39, 47, 49) de détection d'une variation d'un champ magnétique local dans une ou plusieurs de bandes de fréquence RFID et aptes à produire un signal de détection lorsqu'une variation de champ magnétique est détectée, comportent :
- un moyen (23) détecteur d'enveloppe du champ magnétique couplé aux moyens (2) formant antenne et donnant l'amplitude instantanée d'un signal capté par lesdits moyens (2) formant antenne,
- un filtre passe bas (60) couplé au moyen (23) détecteur d'enveloppe.
- un amplificateur différentiel (26) ayant deux entrées (27, 28) l'une (27) couplée au filtre passe bas (60) et l'autre (28) aux moyens (23) détecteur d'enveloppe, et une sortie portant le signal de détection.

9. Dispositif (20) protecteur de la vie privée selon la revendication 8, dans lequel les moyens (39, 47, 49) de détection d'une variation d'un champ magnétique local dans une ou plusieurs de bandes de fréquence RFID et aptes à produire un signal de détection lorsqu'une variation de champ magnétique est détectée, comportent :
- un moyen démodulateur (47) couplé aux moyens (2) formant antenne et démodulant un signal capté par lesdits moyens (2) formant antenne,
- un séquenceur (49) couplé au moyen démodulateur et recevant ledit signal de détection, ledit séquenceur (49) étant couplé aux moyens (26, 48, 49) de commande de la variation de ladite charge (22) pour commander une activation desdits moyens de commande .

10. Dispositif (20) protecteur de la vie privée selon la revendication 9, le séquenceur (49) comportant des moyens de mémoire stockant une liste d'identification de lecteurs autorisés d'étiquettes RFID, ou une liste d'identifications d'étiquettes, le séquenceur commandant lesdits moyens (26, 48, 49) de commande de la variation de ladite charge (22) pour faire varier ladite charge de façon à ce qu'elle produise une interrogation, ledit séquenceur (49) n'activant pas lesdits moyens (26, 48, 49) de commande de la variation de ladite charge, si une réponse est reçue identifiant un lecteur (10) ou une étiquette (31, 32) figurant sur ladite liste.

11. Dispositif (20) protecteur de la vie privée selon la revendication 10, comportant en outre des moyens (49) permettant l'émission, lorsque à l'étape a) il est détecté une variation du champ magnétique local, d'un code électronique de produit (EPC) identifiant le dispositif protecteur de la vie privée, ce code ayant notamment une identification de classe d'objet permettant de savoir que l'objet est un dispositif de protection de la vie privée et un numéro de série permettant d'identifier un dispositif particulier à l'intérieur de la classe d'objet, le code EPC émis comportant l'identification de la classe d'objet et un numéro de série fictif, variant à chaque nouvelle émission du code EPC.

12. Dispositif nomade, en particulier téléphone portable comportant une pile ou une batterie, **caractérisé en ce qu'**il comporte en outre un dispositif selon l'une des revendications 8 à 11.

## Claims

1. Privacy protection method designed to prevent or authorize a communication between a reader and at least one RFID label situated in an efficiency zone, implemented by a privacy protection device separate from the reader and RFID label, wherein:
a) there is a permanent detection of a possible variation of an ambient magnetic field in one or more frequency bands allocated to the RFID labels, corresponding to a request by the reader to the label or a response from the label to the reader,
b) in the event of a detection of such a variation, scrambling takes place of the request from the reader or a response of the label by modifying the parameter value of a magnetic circuit of the protection device in such a way as to effect a counter-load modulation able to modify the request emitted by the reader or oppose the modulation produced by the response of the label.

2. Privacy protection method according to claim 1, the detection of the possible variation of the ambient magnetic field being implemented:
- by producing a representative signal of a mean value of the magnetic field during a detection period,
- by comparing the representative signal of a mean value of the magnetic field during said detection period to a representative signal of the instantaneous value of the magnetic field,
- by deciding that there is a variation of the local magnetic field if the result of the comparison reveals a difference between the mean signal and the instantaneous signal which is higher than a predetermined level.

3. Privacy protection method according to one of the claims 1 or 2, wherein for the modification of the parameter of a magnetic circuit provided in stage b),
- a signal that is representative of the difference between a mean value and an instantaneous value of the magnetic field is produced and the said difference signal is used to modify the said parameter in order to bring the instantaneous value of the magnetic field to its mean value.

4. Privacy protection method of any of the preceding claims, wherein:
- when in step a) a variation of the local magnetic field is detected, an interrogation is emitted requesting the identification of a reader or a label,
- in the event of an identification response being received, the identification is compared to each of the identification on a list, and
- if the identification response is identical to the identification appearing on the list, an inhibiting signal is emitted, which inhibits the modification of the parameter of the magnetic circuit,
- if there is no identification response or if the identification received does not appear on the list, then no inhibiting signal inhibiting the modification of the parameter of the magnetic circuit is emitted.

5. Privacy protection method of any of claims 1 to 3, wherein:
- when in step a) a variation of the local magnetic field is detected, an interrogation is emitted requesting the identification of a reader or a label,
- in the event of an identification response being received, the identification is compared to each of the identification on a list, and
- if the identification response is identical to the identification appearing on the list, the parameter of the magnetic circuit is modified so that the communication between the reader and at least one RFID label situation in the efficiency zone is transmitted in encoded form,
- if there is no identification response or if the identification received does not appear on the list, then no inhibiting signal inhibiting the modification of the parameter of the magnetic circuit is emitted.

6. Privacy protection method of any of claims 1 to 3, wherein:
- when in step a) a variation of the local magnetic field is detected, an electronic product code (EPC) is emitted, which identifies a privacy protective device, wherein this code has especially an object classification identification that can determine that the object is a privacy protective device and a serial number permitting the identification of a specific device within the object classification, wherein the code EPC emitted comprising the object classification identification and a fictive serial number, which varies each time that the EPC code is emitted.

7. Privacy protective device (20) designed to prevent or authorize a communication between a reader and at least one RFID label is an efficiency zone of the device, comprising:
- means (39, 47, 49) of detecting a variation of a local magnetic field in one or more RFID frequency bands and which produce a detection signal when a variation of the magnetic field is detected,
- means (2) forming an antenna,
- a load (22, 2) variable by command coupled to the said means forming an antenna,
- command means (26, 48, 49, 60) able to command a variation of the said load (22, 2) after the reception of said detection signal in order to scramble the request emitted by the reader or a response of the label respectively by modifying the request emitted by the reader or opposing the modulation produced by the label response.

8. Privacy protection device (20) of claim 7, wherein:
- the means (39, 47, 49) of detecting a variation of a local magnetic field in one or more RFID frequency bands that produce a detection signal when a variation of the magnetic field is detected, comprises:
- a means (23) for detecting a field envelope coupled to the means (2) forming an antenna and providing the instantaneous amplitude of a signal captured by the said means (2) forming antenna,
- a low pass filter (60) coupled to the envelope detector means (23),
- a differential amplifier (26) with two inputs (27, 28), one (27) coupled to the low pass filter (60) and the other (28) to the envelope detector means (23), and an output carrying the detection signal.

9. Privacy protection device (20) of claim 8, wherein:
- the means (39, 47, 49) of detecting a variation of a local magnetic field in one or more RFID frequency bands and that produce a detection signal when a variation of the magnetic field is detected, comprising demodulator means (47) coupled to the means (2) forming an antenna and demodulating a signal captured by the said means (2) forming an antenna,
- a sequencer (49) coupled to the demodulator means receiving the said detection signal, wherein the said sequencer (49) is coupled to the means (26, 48, 49) of commanding the variation of the said load (22) to command an activation of the said means.

10. Privacy protection device (20) of claim 9, wherein the sequencer (49) comprises memory means storing a list of identification of authorized RFID label readers, or a list of label identifications, wherein the sequencer commands the said means (26, 48, 49) for commanding the variation of the said load (22) to vary the said load so that it produces an interrogation, wherein the said sequencer (49) does not activate the said means (26, 48, 49) for commanding the variation of the said load, if a response is received identifying a reader (10) or a label (31, 32) appearing on the said list.

11. Privacy protection device (20) according to claim 10, also comprising means (49) permitting the emission, when in stage a) there has been a local magnetic field variation detected, of an electronic product code (EPC) identifying the privacy protection device, said code having in particular an object class identification making it possible to know that the object is a privacy protection device and a serial number making it possible to identify a particular device within the object class, the EPC emitted incorporating the identification of the object class and a fictional serial number varying on each new emission of the EPC.

12. Nomad device, in particular a mobile telephone comprising a battery, **characterized in that** it also comprises a device of any of claims 8 to 11.

## Patentansprüche

1. Privatlebenschutzverfahren, dazu bestimmt, eine Kommunikation zwischen einem Lesegerät und wenigstens einem in einem Wirksamkeitsbereich befindlichen RFID-Etikett zu verhindern oder zu gestatten, angewendet durch eine von dem Lesegerät und dem RFID-Etikett getrennte Privatlebenschutzvorrichtung,
wobei man in diesem Verfahren:
a) permanent eine eventuelle Veränderung eines Umgebungsmagnetfelds in einem oder mehreren den RFID-Etiketten zugeteilten Frequenzbändern detektiert, die einer durch das Lesegerät an das Etikett gesendeten Abfrage oder einer durch das Etikett an das Lesegerät gesendeten Antwort entspricht,
b) im Falle der Detektion einer solchen Veränderung die durch das Lesegerät gesendete Anfrage oder die durch das Etikett gesendete Antwort stört, indem man einen Parameterwert eines Magnetkreises der Schutzvorrichtung modifiziert, um eine Lastgegenmodulation zu bewirken, fähig die durch das Lesegerät gesendete Anfrage zu modifizieren oder der durch die Antwort des Etiketts erzeugten Modulation entgegenzuwirken.

2. Privatlebenschutzverfahren nach Anspruch 1, wobei die Detektion der eventuellen Veränderung des Umgebungsmagnetfelds realisiert wird:
- indem man eine Signal erzeugt, das im Verlauf einer Detektionsperiode repräsentativ ist für einen Mittelwert des Magnetfelds,
- indem man das im Verlauf einer Detektionsperiode für einen Mittelwert des Magnetfelds repräsentative Signal mit einem Signal vergleicht, das repräsentativ ist für den Momentanwert des Magnetfelds,
- indem man entscheidet, dass eine lokale Veränderung des Magnetfelds vorliegt, wenn das Resultat des Vergleichs eine Differenz zwischen dem Durchschnittssignal und dem Momentansignal anzeigt, die größer ist als ein vorherbestimmtes Niveau.

3. Privatlebenschutzverfahren nach einem der Ansprüche 1 oder 2, in dem - zur Modifizierung des Parameters eines in Schritt b) vorgesehenen Magnetkreises
- man ein Signal erzeugt, das repräsentativ ist für die Differenz zwischen einem Mittelwert und einem Momentanwert des Magnetfelds, und man das genannte Differenzsignal benutzt, um den genannten Parameter so zu modifizieren, dass der Momentanwert des Magnetfelds auf seinen Mittelwert zurückgeführt wird.

4. Privatlebenschutzverfahren nach einem der vorangehenden Ansprüche, in dem:
- wenn in Schritt a) eine Veränderung des lokalen Magnetfelds detektiert wird, man eine Abfrage sendet, die eine Identifikation eines Lesegeräts oder eines Etiketts verlangt,
- falls eine Identifikationsantwort eintrifft, man die Identifikation mit jeder der Identifikationen einer Liste vergleicht, und
- wenn die Identifikationsantwort identisch ist mit einer in der Liste stehenden Identifikation, man ein Inhibitionssignal sendet, das die in Schritt b) vorgesehene Modifikation des Parameters verhindert,
- falls keine ldentifikationsantwort eintrifft oder wenn die empfangene Identifikation nicht in der Liste steht, kein die Modifikation des Parameters des Magnetkreises verhinderndes Inhibitionssignal gesendet wird.

5. Privatlebenschutzverfahren nach einem der Ansprüche 1 bis 3, in dem:
- wenn in Schritt a) eine Veränderung des lokalen Magnetfelds detektiert wird, man eine Abfrage sendet, die eine Identifikation eines Lesegeräts oder eines Etiketts verlangt,
- falls eine Identifikationsantwort eintrifft, man die empfangene Identifikation mit Identifikationen einer Liste vergleicht, und
- wenn die Identifikationsantwort identisch ist mit einer in der Liste stehenden Identifikation, die Modifikation des Parameters des Magnetkreises so realisiert wird, dass die Kommunikation zwischen dem Lesegerät und wenigstens einem in dem Wirksamkeitsbereich befindlichen RFID-Etikett auf verschlüsselte Weise übertragen wird,
- wenn keine Identifikationsantwort eintrifft oder wenn die empfangene Identifikation nicht in der Liste steht, kein die Modifikation des Parameters des Magnetkreises verhinderndes Inhibitionssignal gesendet wird.

6. Privatlebenschutzverfahren nach einem der Ansprüche 1 bis 3, in dem:
- wenn in Schritt a) eine Veränderung des lokalen Magnetfelds detektiert wird, man einen elektronischen Produktcode (EPC) sendet, der eine Privatlebenschutzvorrichtung identifiziert, wobei dieser Code insbesondere eine Objektklassenidentifizierung umfasst, die ermöglicht, zu wissen, dass das Objekt eine Privatlebenschutzvorrichtung ist, und eine Seriennummer, die ermöglicht, eine partikulare Vorrichtung innerhalb der Objektklasse zu identifizieren, wobei der gesendete EPC-Code die Identifikation der Objektklasse und einer fiktiven Seriennummer umfasst, die mit jeder neuen Sendung des EPC-Codes variiert.

7. Privatlebenschutzvorrichtung (20), dazu bestimmt, eine Kommunikation zwischen einem Lesegerät und wenigstens einem RFID-Etikett in einem Wirksamkeitsbereich zu verhindern oder zu gestatten, umfassend:
- Einrichtungen (39, 47, 49), fähig zur Detektion einer Veränderung eines lokalen Magnetfelds in einem oder mehreren RFID-Frequenzbändern, die einer durch das Lesegerät an das Etikett gesendeten Anfrage oder einer durch das Etikett an das Lesegerät gesendeten Antwort entspricht, und fähig, ein Detektionssignal zu erzeugen, wenn eine Magnetfeldveränderung detektiert wird,
- Antenne-bildende Einrichtungen (2),
- eine mit den Antenne-bildenden Einrichtungen gekoppelte, steuerbar variable Last (22, 2),
- Steuereinrichtungen (26, 48, 49, 60), fähig nach Empfang des genannten Detektionssignals eine Veränderung der genannten Last (22, 2) zu steuern, um eine Störung der durch das Lesegerät gesendeten Anfrage oder einer durch das Etikett gesendeten Antwort zu bewirken, indem man die durch das Lesegerät gesendete Anfrage modifiziert oder der durch das Etikett erzeugten Modulation entgegenwirkt.

8. Privatlebenschutzvorrichtung (20) nach Anspruch 7, bei der die Einrichtungen (39, 47, 49) zur Detektion einer Veränderung eines lokalen Magnetfelds in einem oder mehreren RFID-Frequenzbändern fähig sind, ein Detektionssignal zu erzeugen, wenn eine Magnetfeldveränderung detektiert wird, umfassend:
- eine Magnetfeldhüllen-Detektionseinrichtung (23), gekoppelt mit den Antenne-bildenden Einrichtungen (2), welche die Momentanamplitude eines durch die genannten Antenne-bildenden Einrichtungen (2) aufgefangenen Signals liefern,
- ein mit der Hüllendetektionseinrichtung (23) gekoppeltes Tiefpassfilter (60),
- einen Differentialverstärker (26) mit zwei Eingängen (27, 28), wobei der eine (27) mit dem Tiefpassfilter (60) gekoppelt ist und der andere (28) mit den Hüllendetektionseinrichtungen (23), und einen das Detektionssignal liefernden Ausgang.

9. Privatlebenschutzvorrichtung (20) nach Anspruch 8, bei der die Einrichtungen (39, 47, 49) zur Detektion einer Veränderung eines lokalen Magnetfelds in einem oder mehreren RFID-Frequenzbändern fähig sind, ein Detektionssignal zu erzeugen, wenn eine Magnetfeldveränderung detektiert wird, umfassend:
- eine Demodulationseinrichtung (47), gekoppelt mit den Antenne-bildenden Einrichtungen (2), bestimmt zur Demodulation eines durch die Antenne-bildenden Einrichtungen (2) aufgefangenen Signals,
- eine Ablaufsteuerung (49), gekoppelt mit der Demodulationseinrichtung, die das genannte Detektionssignal empfängt, wobei die genannte Ablaufsteuerung (49) mit den Steuereinrichtungen (26, 48, 49) der Veränderung der genannten Last (22) gekoppelt ist, um eine Aktivierung der genannten Steuereinrichtungen zu steuern.

10. Privatlebenschutzvorrichtung (20) nach Anspruch 9, wobei die Ablaufsteuerung (49) Speichereinrichtungen einer Identifikationsliste autorisierter RFID-Etikettenlesegeräte oder eine Etikettenidentifikationsliste umfasst, die Ablaufsteuerung die genannten Steuereinrichtungen (26, 48, 49) der Veränderung der genannten Last (22) steuert, um die genannte Last so zu verändern, dass sie eine Abfrage erzeugt, und die genannte Ablaufsteuerung (49) die genannten Steuereinrichtungen (26, 48, 49) der Veränderung der genannten Last nicht aktiviert, wenn eine Antwort empfangen wird, die ein Lesegerät (10) oder ein in der genannten Liste stehendes Etikett (31, 32) identifiziert.

11. Privatlebenschutzvorrichtung (20) nach Anspruch 10 mit außerdem Einrichtungen (49), fähig - wenn in dem Schritt a) eine Veränderung des lokalen Magnetfelds detektiert wird -, einen elektronischen Produktcode (EPC) zu senden, der die Privatlebenschutzvorrichtung identifiziert, wobei dieser Code insbesondere eine Objektklassenidentifizierung umfasst, die ermöglicht, zu wissen, dass das Objekt eine Privatlebenschutzvorrichtung ist, und eine Seriennummer, die ermöglicht, eine partikulare Vorrichtung innerhalb der Objektklasse zu identifizieren, wobei der gesendete EPC-Code die Identifikation der Objektklasse und einer fiktiven Seriennummer umfasst, die mit jeder neuen Sendung des EPC-Codes variiert.

12. Mobile Vorrichtung, insbesondere batterie- oder akkubetriebenes Mobiltelefon,
**dadurch gekennzeichnet, dass** sie zusätzlich eine Vorrichtung nach einem der Ansprüche 8 bis 11 umfasst.
